# EUROPEAN PATENT APPLICATION

(11) **EP 4 492 257 A1**
(43) Date of publication of application: **15.01.2025**
(21) Application number: 24186630.0
(22) Date of filing: 04.07.2024
(51) Int. Cl.: G06F 16/335, G06F 16/34

(54) **SMART NOTIFICATION FOR STRUCTURED AND UNSTRUCTURED DATA**

(30) Priority: 11.07.2023 US 202363513019 P
(71) Applicant: CrowdStrike, Inc., Sunnyvale, CA 94086 (US)
(72) Inventor: Radu, Daniel, Sunnyvale, 94086 (US); Radu, Marian, Sunnyvale, 94086 (US); Corlatescu, Dragos, Sunnyvale, 94086 (US); Belibov, Dan, Sunnyvale, 94086 (US); Kurtz, George, Robert, Sunnyvale, 94086 (US); Sentonas, Michael, Sunnyvale, 94086 (US)
(74) Representative: Murgitroyd & Company

(57) **Abstract**

Systems and methods for providing cybersecurity notifications based on structured and unstructured data. The systems and methods receive a natural language query from a client device and processes, by an artificial intelligence model, the natural language query to identify elements of cybersecurity intelligence to monitor. The systems and methods further monitor cybersecurity intelligence for a match to the identified elements from the natural language query and provide a notification to the client device in response to the matching of the identified elements to one or more items of cybersecurity intelligence.

## Description

### CROSS-REFERENCE TO RELATED APPLICATIONS

This application claims priority from and the benefit of United States Provisional Patent Application No. 63/513,019 filed July 11, 2023, the entire contents of which are incorporated herein by reference.

### TECHNICAL FIELD

Aspects of the present disclosure relate to alert notification systems, and more particularly, to generation of notifications for structured and unstructured data using an artificial intelligence model.

### BACKGROUND

Alert Notification Systems monitor data and provide alerts or notifications when a query or defined event occurs in the system or in data being monitored. Such notification systems can be used to detect and notify users of cybersecurity events in view of new information, reports, etc.

Large language models are designed to understand and generate coherent and contextually relevant text. Large language models are typically built using deep learning techniques using a neural network architecture and are trained on substantial amounts of text data for learning to generate responses. The training process for large language models involves exposing the model to vast quantities of text from various sources, such as books, articles, websites, and other data.

Large language models use tokens as fundamental units into which text is divided for processing. Tokens are usually smaller units of text, such as individual characters, sub words (e.g., byte-pair encoding), or words. Large language models tokenize queries and general text documentation as part of its input processing, which enables large language models to manage large volumes of general text documentation efficiently. By breaking the text into tokens and representing text numerically, large language models can understand and generate responses based on the underlying patterns and relationships within the text.

### SUMMARY

Accordingly there is provided a method, a system, and a computer program as detailed in the claims that follow.

### BRIEF DESCRIPTION OF THE DRAWINGS

The described embodiments and the advantages thereof may best be understood by reference to the following description taken in conjunction with the accompanying drawings. These drawings in no way limit any changes in form and detail that may be made to the described embodiments by one skilled in the art without departing from the spirit and scope of the described embodiments.
FIG. 1 is a block diagram illustrating an example system architecture with a notification system for providing cybersecurity notifications, in accordance with some embodiments of the present disclosure.
FIG. 2 is a block diagram that illustrates an example system for providing cybersecurity notifications based on structured and unstructured data, in accordance with some embodiments of the present disclosure.
FIG. 3 is a block diagram illustrating an example system for cybersecurity notifications, in accordance with embodiments of the present disclosure.
FIG. 4 is a flow diagram of an example method of processing a user request for cybersecurity notifications based on structured and unstructured data, in accordance with some embodiments of the present disclosure.
FIG. 5 is a flow diagram of another example method of providing cybersecurity notifications based on structured and unstructured data using an artificial intelligence model, in accordance with some embodiments of the present disclosure.
FIG. 6 is a block diagram of an example computing device that may perform one or more of the operations described herein, in accordance with some embodiments of the present disclosure.

### DETAILED DESCRIPTION

Cybersecurity events are numerous and complex and while intelligence teams may work to provide valuable information to customers in unstructured data formats, such as reports, emails, etc., given the numerosity of events and information it may be nearly impossible to read all of the reports and take action when a threat is apparent. As discussed above, notification systems can provide notifications or alerts of cybersecurity events based on information that is provided in a structured format (e.g., specific signs of breach in a network, manually annotated reports, or particular textual searches based on user defined filters). However, such use cases are specific and limited to the real-world scenarios that are desired by the users. Additionally, in cases of textual searches of cybersecurity intelligence, false positives may occur without proper context regarding the text being searched. Furthermore, identifying of relevant cybersecurity information for many use cases may require particular knowledge of the structured data included in the cybersecurity intelligence, limiting the applicability and use of the notification system to domain experts. Accordingly, conventional alert systems and cybersecurity analysis techniques may be unable to efficiently use unstructured data to identify and generate alerts. Additionally, conventional notification systems using structured data may be inaccessible and unusable by users with limited experience or knowledge of specific cybersecurity domains.

The present disclosure addresses the above-noted and other deficiencies by providing a notification system powered by an AI model (e.g., a generative AI model) to provide users with tailored alerts and summaries for their specific interests on both structured and unstructured data. The notification system may allow users to express notification preferences in natural language (e.g., without requirements of domain expertise or knowledge) thus providing for an easier way for users to interact with the underlying cybersecurity platform and to receive relevant reports from the notification system.

In some embodiments, a user can provide a detailed scenario or specific topic for which they would like to be notified using a natural language query (e.g., "notify me about the latest attacks for Fancy Bear" or "inform me of any Ransomware that targets the financial industry present on Windows^{™} machines"). Accordingly, even users with minimal technical knowledge may be able to provide a query to the notification system and obtain notifications that correspond to the requested scenario.

In some embodiments, the AI model may be a generative AI model, such as a large language model (LLM). An LLM may be, for example, deep learning techniques that can recognize, summarize, translate, predict, and/or generate content based on very large datasets. The AI model may process the natural language query received from the user and identify particular cybersecurity elements that are to be monitored for the request. The particular cybersecurity elements may be entered into the notification system as one or more notification request entries. The notification system may monitor newly received cybersecurity information, such as reports, for the particular cybersecurity elements of the notification request entries. In some embodiments, the notification system may continuously monitor new intelligence reports and databases of the underlying cybersecurity platform. The AI model may analyze the content of the incoming new data to determine if any of the new data matches or is related to the user request or scenario (e.g., based on the particular cybersecurity elements identified from the query). For example, the AI model may identify specific keywords, assess context of the keywords and the new data, and determine the relevancy of the data to the request. In some embodiments, when the AI model identifies a match in the new data to the user request, the notification system may provide the user with a notification about the new report. In some embodiments, the AI model may also provide a summary of the report with respect to the user request and the information that may be relevant and tailored to the user request or interests.

As discussed herein, the present disclosure provides an approach that improves the operation of a computer system by applying notification system monitoring to both structured and unstructured data in some embodiments. Furthermore, notification systems are enhanced by allowing users to request notifications even with limited understanding of the structure or representation of the data in the target system (e.g., system monitored by the notification system) and how to query the data in the target system. Furthermore, notification systems are enhanced by inferring notification criteria from a user query at runtime by generating a generative workflow from the query.

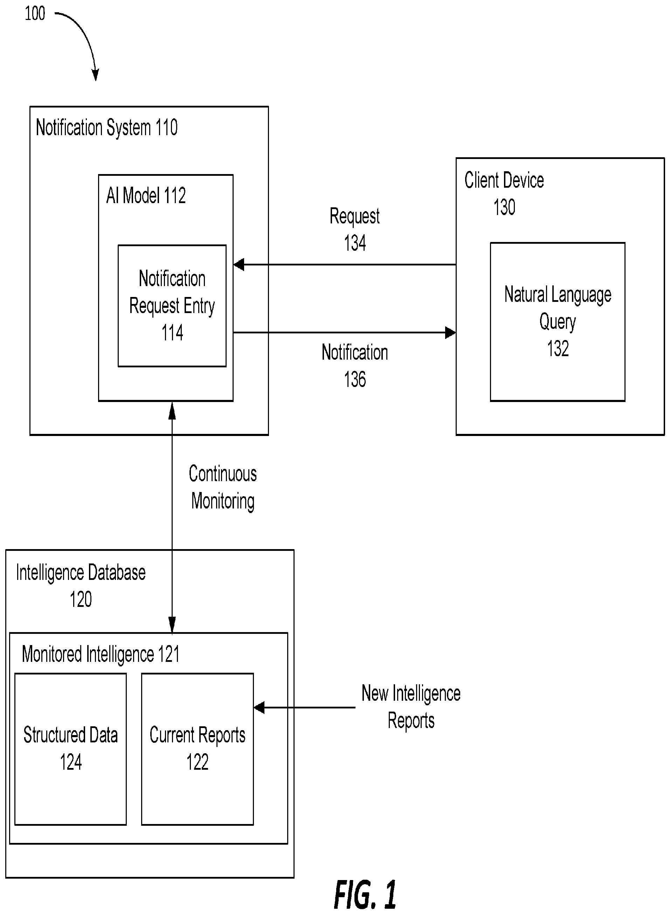

FIG. 1 is a block diagram illustrating a computing system architecture 100 in which embodiments of the present invention may operate. Computing system architecture 100 may include a cybersecurity platform 104 for monitoring one or more managed systems 130 such as computing devices, networks, systems, software, etc. (e.g., managed devices 132 and managed software 134). The cybersecurity platform 104 may be any data processing device, such as a desktop computer, a laptop computer, a mainframe computer, a personal digital assistant, a rack-mount server, a hand-held device or any other device configured to process data. The cybersecurity platform 104 may identify and collect cybersecurity intelligence, such as cybersecurity reports on vulnerabilities of managed systems 130, malicious actors, attack patterns, and any other information regarding cybersecurity. In some embodiments, the cybersecurity platform 104 may collect and store the cybersecurity intelligence in an intelligence database 120 which may be monitored for events or information related to a user notification request or query.

In some embodiments, the cybersecurity platform may include notification system 110 that may receive user queries or requests for notifications regarding particular cybersecurity events or information. For example, notification system 110 may include a notification interface component 112 which may receive and identify a notification query from a client device 102. The client device 102 may be any data processing device, such as a desktop computer, a laptop computer, a mainframe computer, a personal digital assistant, a rack-mount server, a hand-held device or any other device configured to process data. For example, notification interface component 112 may be an application programming interface (API) of the notification system 110 for receiving user queries from a client device 102. For example, a user may provide a notification query via a user interface 103 of the client device 102, the client device may transmit the query to the notification interface component 112 for processing by the notification system 110.

In some embodiments, the notification interface component 112 may provide the query to an AI model 114 for determination of a workflow for identifying and monitoring intelligence corresponding to the user query. For example, the AI model 114 may be a generative AI model, such as a large language model. The AI model 114 may determine from the query what information is being requested by the user, such as which managed systems 130 the request corresponds to, what type of information the request is seeking, and the conditions that the information is to meet for a notification to be generated and provided to the user. In some embodiments, the AI model 114 may be a generic AI model, such as an LLM trained on cybersecurity data. Therefore, to generate the workflow, the query may be engineered or modified (e.g., by the notification interface component 112 or other processing logic) to make one or more queries to the AI model 114 based on the user query to identify the key components of the original user query, the context (e.g., monitored systems of the user or user query) of the user query, and to generate the workflow from the key components and the context (e.g., for monitoring those identified components). In some embodiments, the AI model 114 may be trained using cybersecurity data and sample queries to identify the key components of a user query, the context of the user query, and the semantic intent of the user query to generate a workflow to monitor the key components of the user query within the determined context and based on the semantic intent of the query. Accordingly, the particularly trained model may receive the original user query and generate a workflow without necessitating prompt modification. In some examples, embodiments may include a combination of particularly trained AI model and automatic prompt modification and engineering to generate the monitoring workflow.

Accordingly, a workflow component 116, which may be separate from or incorporated within the AI model 114, may identify and obtain any additional information necessary to perform the workflow. For example, the workflow component 116 may query or scan the managed systems 130 for systems data associated with the user request (e.g., systems for which the user has requested monitoring), the intelligence database 120 to monitor, and so forth. Accordingly, the AI model 114 and the workflow component 116 may identify and obtain the information necessary to monitor the intelligence database 120 or other sources of cybersecurity based on the user notification query.

Once the elements for monitoring cybersecurity intelligence are determined, identified, and obtained, monitoring component 118 may continuously or periodically monitor the intelligence database 120 or other sources, for new information (e.g., new reports) that correspond to the elements of the user request. In some embodiments, the monitoring component 118 may be separate from the AI model 114 while in other embodiments the monitoring component 118 may be incorporated within the AI model 114. In some examples, the monitoring component 118 may store a notification request entry including all elements of the notification query to be matched for a notification to be produced. The monitoring component 118 may identify when new reports or any other new cybersecurity intelligence is received or stored at the intelligence database 120 and provide the new information to the AI model 114 for determination as to whether the report matches the elements of the request. For example, the AI model 114 may determine whether keywords, context, etc. are matched between the elements of the request and the new intelligence. The AI model 114 may further generate a notification if there is a match along with a summary of the matched intelligence. The AI model 114 may then provide the notification to the notification interface component 112 which may provide the notification to the client device 102 to be displayed via user interface 103.

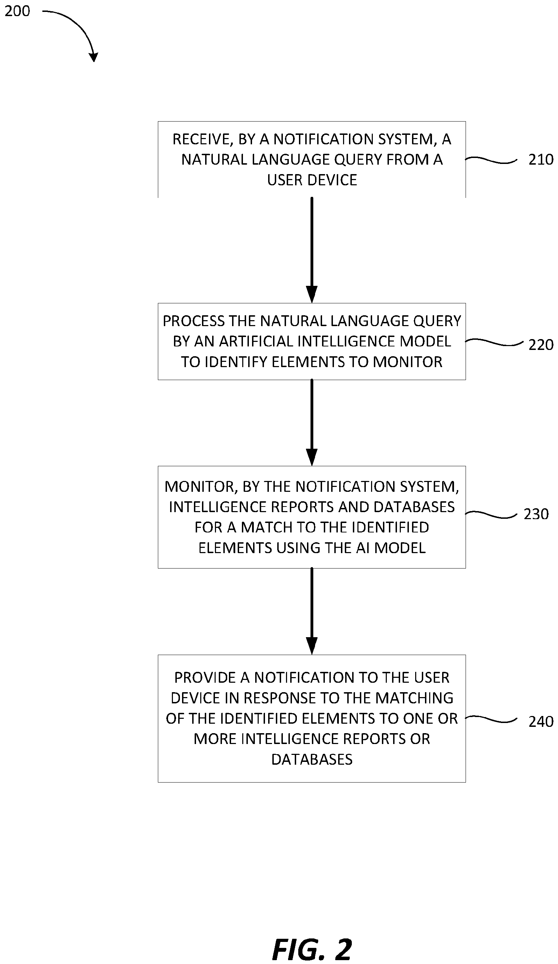

FIG. 2 is a block diagram that illustrates an example system 200 for providing cybersecurity notifications based on structured and unstructured data, in accordance with some embodiments of the present disclosure. System 200 includes a notification system 210, a records database 220 and a client device 230. The notification system 210 and the client device 230 may be each be a server, a mainframe, a workstation, a personal computer (PC), a mobile phone, a palm-sized computing device, etc. The intelligence database 220 may be a data store, a server, a virtual machine, or any other entity or device for storing, streaming, or processing records or data.

In some embodiments, the notification system 210 may deploy an AI model 212 to receive a request 234 from a client device including a natural language query 232. The AI model 212 may be a generative AI model such as a large language model (LLM), complex neural network, or other machine learning model. The AI model 212 may receive the natural language query 232 of the request 234 and determine one or more elements to be monitored based on the query. In some embodiments, the AI model 212 may determine via workflow generator 215 a generative workflow from the query 232. For example, a natural language query asking "notify me when vulnerabilities are found in applications deployed in my environment" the workflow generator 215 of the AI model 212 may generate a workflow that 1) enumerates all applications installed in the target environment, and 2) monitor for whether any new vulnerability is identified (e.g., in the current records 222 of the intelligence database 220). In some embodiments, the AI model 212 may generate a notification request entry 214 in response to the request 234 to continuously monitor new intelligence reports for information associated with the notification request entry 214.

In some examples, to monitor the new intelligence reports for matches to the notification request entry 214, the AI model 212 may continuously or intermittently search the current records 222, the structured data 224, or any combination of monitored intelligence 221 of the intelligence database 220 for information associated with the notification request entry 214 and correspondingly the user query 232. In some examples, the AI model 212 may search new intelligence reports as they are received by the intelligence database 220. In another example, the AI model 212 may search all current reports 222 or all monitored intelligence 221 in response to the notifications request entry 214. In some examples, the AI model 212 may identify reports or information (e.g., structured or unstructured data) related to the notification request entry 214 based on keywords and context of the keywords within the report as compared to the context of the natural language query 232. Upon identifying one or more reports or information in the monitored intelligence 221 that match the notification request entry 214, the notification system 210 may provide a notification 236 of the identified one or more reports and data to the client device 230. Additionally, the notification system 210 may provide the identified one or more reports or data to the client device 230. In some examples, the AI model 212 may generate a summary of the identified one or more reports with respect to the user query 232 (e.g., a summary of the portions of the one or more reports that are relevant to user request) and the notification system 210 may provide the summary to the client device 230 along with the notification 236.

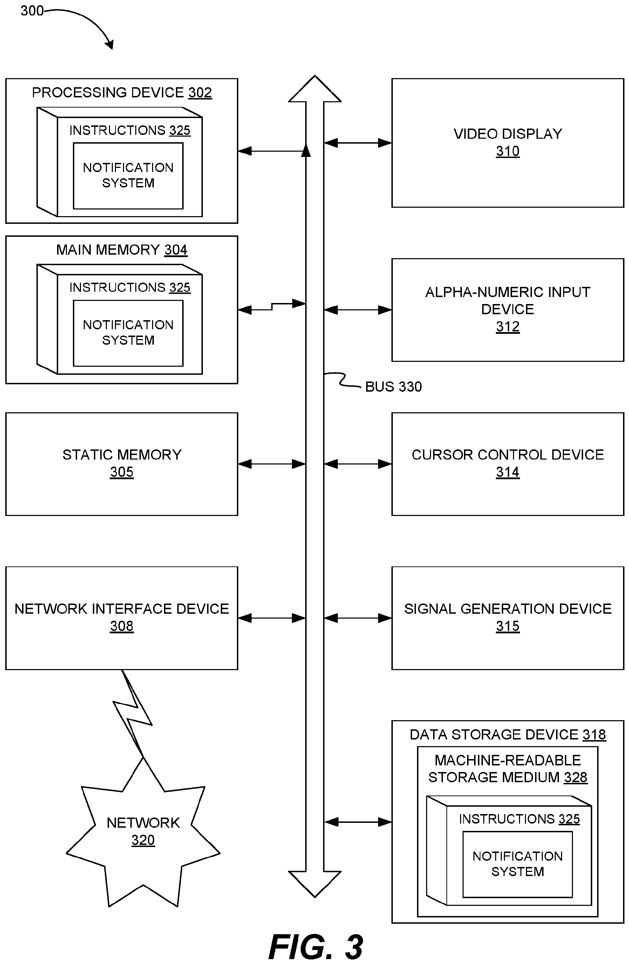

FIG. 3 is a block diagram depicting an example of cybersecurity notification system 104, as depicted in FIG. 1, according to some embodiments. While various devices, interfaces, and logic with particular functionality are shown, it should be understood that cybersecurity notification system 104 includes any number of devices and/or components, interfaces, and logic for facilitating the functions described herein. For example, the activities of multiple devices may be combined as a single device and implemented on the same processing device (e.g., processing device 302), as additional devices and/or components with additional functionality are included.

The cybersecurity notification system 104 includes a processing device 302 (e.g., general purpose processor, a PLD, etc.), which may be composed of one or more processors, and a memory 304 (e.g., synchronous dynamic random-access memory (DRAM), read-only memory (ROM)), which may communicate with each other via a bus (not shown).

The processing device 302 may be provided by one or more general-purpose processing devices such as a microprocessor, central processing unit, or the like. In some embodiments, processing device 302 may include a complex instruction set computing (CISC) microprocessor, reduced instruction set computing (RISC) microprocessor, very long instruction word (VLIW) microprocessor, or a processor implementing other instruction sets or processors implementing a combination of instruction sets. In some embodiments, the processing device 302 may include one or more special-purpose processing devices such as an application specific integrated circuit (ASIC), a field programmable gate array (FPGA), a digital signal processor (DSP), network processor, or the like. The processing device 302 may be configured to execute the operations described herein, in accordance with one or more aspects of the present disclosure, for performing the operations and steps discussed herein.

The memory 304 (e.g., Random Access Memory (RAM), Read-Only Memory (ROM), Non-volatile RAM (NVRAM), Flash Memory, hard disk storage, optical media, etc.) of processing device 302 stores data and/or computer instructions/code for facilitating at least some of the various processes described herein. The memory 304 includes tangible, non-transient volatile memory, or non-volatile memory. The memory 304 stores programming logic (e.g., instructions/code) that, when executed by the processing device 302, controls the operations of the cybersecurity notification system 104. In some embodiments, the processing device 302 and the memory 304 form various processing devices and/or circuits described with respect to cybersecurity notification system 104.

The processing device 302 executes a notification interface component 112, an AI model 114, a workflow component 116, and monitoring component 118. The notification interface component 112 may receive a notification query requesting notifications regarding particular cybersecurity events in a natural language. For example, the notification query may be in an unstructured format without specific information or domain specifics for the cybersecurity notification system 104. In some embodiments, the notification interface component 112 provides the natural language notification to AI model 114 for processing. The AI model 114 may identify a generative workflow to be performed to monitor the requested cybersecurity events/data. In some embodiments, the AI model 114 may identify the devices, software, systems, etc. for which the cybersecurity request is associated. Additionally, the AI model 114 may identify conditions associated with the identified systems which must be met in order for a notification to be generated in response to the notification request.

The workflow component 116 may use the workflow generated by the AI model 114 to identify and retrieve any additional information associated with the request. For example, the workflow generated by the AI model 114 may determine which devices or systems should be identified or from which additional system information may be required for monitoring cybersecurity events associated with the devices or systems. The workflow component 116 may further identify the elements to be matched and conditions to be met for a notification to be generated. The monitoring component 118 may store the identified elements for notification as a notification request entry (e.g., an entry in the notification system 104 for which cybersecurity information, such as intelligence database 120 will be monitored). The notification request entry may include the required elements and conditions for generating a notification. In some embodiments, the monitoring component 118 may query the intelligence database 120, or other cybersecurity data sources to identify new reports and information. The monitoring component 118 may further provide to, or utilize the AI model 114, for determining whether newly identified reports or intelligence matches the elements of the notification request entry. In some embodiments, the cybersecurity intelligence may be in an unstructured format (e.g., a report) and the AI model 114 may determine whether the intelligence includes information matched by the elements and conditions of the notification request entry. In some embodiments, the AI model 114 may also be used to identify and match structured data from the intelligence database 120 to the elements of the notification request entry. Upon identifying matching intelligence (e.g., a cybersecurity report), the monitoring component 118 (e.g., via the AI model 114) may generate and provide, via the notification interface component 112, a notification to a user corresponding to the initial notification query.

FIG. 4 is a flow diagram of a method 400 of providing cybersecurity notifications based on structured and unstructured data, in accordance with some embodiments of the present disclosure. Method 400 may be performed by processing logic that may include hardware (e.g., circuitry, dedicated logic, programmable logic, a processor, a processing device, a central processing unit (CPU), a system-on-chip (SoC), etc.), software (e.g., instructions running/executing on a processing device), firmware (e.g., microcode), or a combination thereof. In some embodiments, at least a portion of method 400 may be performed by notification system 110 and AI model 114 shown in FIG. 1 and/or notification system 210 and AI model 212 shown in FIG. 2.

With reference to FIG. 4, method 400 illustrates example functions used by various embodiments. Although specific function blocks ("blocks") are disclosed in method 400, such blocks are examples. That is, embodiments are well suited to performing various other blocks or variations of the blocks recited in method 400. It is appreciated that the blocks in method 400 may be performed in an order different than presented, and that not all of the blocks in method 400 may be performed.

With reference to FIG. 4, method 400 begins at block 410, where processing logic (e.g., notification system 110 of FIG. 1 and/or notification system 210 of FIG. 2) receives a natural language query from a client device. The natural language query may include a request for items, events, or information for which the requester desires to receive a notification. For example, the query may include a sentence or paragraph in a natural language requesting a notification (e.g., email, message, alert, etc.) when a certain event occurs, such as a new vulnerability being identified for a computer system managed by or associated with the user.

At block 420, processing logic (e.g., AI model 212) processes the natural language query to identify elements of cybersecurity intelligence to monitor. The AI model may identify one or more workflow steps to be taken in order to accomplish the user requested monitoring task. For example, the AI model may identify a target system from the request and particular types of information or reports associated with the target system to be monitored and identified for notifications. In some examples, the workflow may include steps to obtain additional information necessary to perform the requested monitoring and notification, such as identifying additional system information, location of monitored intelligence, etc.

In some embodiments, the AI model may be a generic AI model, such as an LLM trained on cybersecurity data. Therefore, to generate the workflow, the query may be engineered or modified (e.g., by the notification interface component 112 or other processing logic) to make one or more queries to the AI model based on the user query to identify the key components of the original user query, the context (e.g., monitored systems of the user or user query) of the user query, and to generate the workflow from the key components and the context (e.g., for monitoring those identified components). For example, the query may be modified to generate a prompt including a request to identify components of the request, such as the data or target system. Additional prompts may be generated to determine context and other variables of the request to be incorporated into a workflow. Finally, a prompt may be generated based on the above determined information to generate a workflow for monitoring such information in the cybersecurity system.

In some embodiments, the AI model may be particularly trained using cybersecurity data and sample queries to identify the key components of a user query, the context of the user query, and the semantic intent of the user query to generate a workflow to monitor the key components of the user query within the determined context and based on the semantic intent of the query. Accordingly, the particularly trained model may receive the original user query and generate a workflow without necessitating prompt modification. In some examples, embodiments may include a combination of particularly trained AI model and automatic prompt modification and engineering to generate the monitoring workflow. For example, the AI model may be a LLM trained to receive a query in natural language and identify contextual meaning of the request for cybersecurity intelligence and monitoring. Accordingly, based on the contextual meaning of the request, the AI model may be able to identify elements corresponding to information and steps to be taken to monitor the cybersecurity intelligence requested. The cybersecurity intelligence may include cybersecurity intelligence reports, cybersecurity intelligence databases, or any other sources of cybersecurity intelligence. In some embodiments, the cybersecurity intelligence may include unstructured data, structured data, or a combination of structured and unstructured data.

A block 430, processing logic (e.g., notification system 110 or AI model 114) monitors cybersecurity intelligence for a match to the identified elements from the natural language query. For example, the AI model (e.g., AI model 114 of FIG. 1, or AI model 212 of FIG. 2) or other processing logic may search newly received intelligence reports (e.g., at a records database or data stream monitored by the notification system) for the identified elements. In some examples, the AI model or other processing logic may identify keywords in the reports that also match the context associated with the natural language query. For example, the AI model or other processing logic may determine if a keyword match is relevant to the user query based on the context of the query and the context of the report (e.g., is it the same system, same type of information, same timeframe, etc. that is requested). Accordingly, false positives for notifications based on convention textual searches can be reduced and provide more targeted and relevant notifications for a user query. In some embodiments, processing logic may generate a notification request entry corresponding to the client device or user requesting the notifications. The notification request entry may include the identified elements for monitoring. Therefore, the notification system may use the notification request entry as an indicator for the information to be monitored, the notifications to be provided, and the user to which the notifications are to be provided.

At block 440, processing logic (e.g., notification system 110) provides a notification to the client device in response to the matching of the identified elements to one or more items of cybersecurity intelligence. The notification may include an identification of the identified relevant intelligence (e.g., an identified report), a copy or link to the identified intelligence, a summary of the intelligence or relevant portions of the intelligence, or any combination thereof. The notification may be provided to the client device or a user (e.g., a user account of the notification system) via email, direct message, text message, web link, or via any other communications protocol to indicate that the requested event or information has been detected.

FIG. 5 is a flow diagram of a method 500 of providing cybersecurity notifications based on structured and unstructured data, in accordance with some embodiments of the present disclosure. Method 500 may be performed by processing logic that may include hardware (e.g., circuitry, dedicated logic, programmable logic, a processor, a processing device, a central processing unit (CPU), a system-on-chip (SoC), etc.), software (e.g., instructions running/executing on a processing device), firmware (e.g., microcode), or a combination thereof. In some embodiments, at least a portion of method 500 may be performed by notification system 210 and/or AI model 212 shown in FIG. 2.

With reference to FIG. 5, method 500 begins at block 502, where processing logic receives a query for cybersecurity notifications in a natural language. The query may be directed to a cybersecurity notification system in which a user is requesting notifications when an event occurs such as new vulnerabilities arise that impact a system of the user. The notification system may receive and process queries in both structured formats as well as in natural language formats to allow both targeted requests as well as broader less informed requests (e.g., from users with little or no domain expertise or knowledge). Accordingly, the requests in the natural language may allow easier access and more streamlined usage of the notification system.

At block 504, processing logic provides the query to an artificial intelligence (AI) model. The AI model may be a generative AI model such as a large language model that can ingest a query in a natural language and determine context and meaning from the query. Accordingly, the AI model may determine the information/notifications sought by the request within the context of the cybersecurity notification system.

At block 506, processing logic generates, by the AI model, a generative workflow for identifying and monitoring elements of cybersecurity intelligence based on the query. In some embodiments, the AI model may determine the steps and information to be obtained and/or monitored for the notification query from the user. For example, the AI model may determine which systems that the request corresponds to (e.g., type of computing device(s), types of software, applications, etc., the type of system, and so forth) as well as the conditions on the cybersecurity intelligence that are to be met for a match and notification to be issued.

At block 508, processing logic determines, based on the generative workflow, cybersecurity elements to be monitored. In some embodiments, additional information may be collected based on the generative workflow determined by the AI model. For example, the generative workflow may indicate that the systems or other data associated with the request of the user are to be determined so that the correct cybersecurity information may be monitored. The processing logic may issue requests or otherwise collect the additional information and the AI model may proceed to determine the particular cybersecurity intelligence conditions to be monitored for the request. For example, processing logic may determine that the user is requesting notifications when new vulnerabilities are identified for a particular system indicated by the notification query.

At block 510, processing logic queries one or more sources of cybersecurity intelligence for newly obtained intelligence. The one or more sources of cybersecurity intelligence may be structured or unstructured data sources. For example, the one or more sources may be cybersecurity intelligence reports from various sources that are collected and stored by the notification system or may be a cybersecurity intelligence database storing intelligence in a structured format.

At block 512, processing logic determines if new intelligence has been identified in the one or more sources of cybersecurity intelligence. For example, the processing logic may continuously or periodically query the one or more cybersecurity intelligence sources to determine if new reports or data have been received since a most recent query of the sources. If no new intelligence is identified, the process returns to block 510 to continue to monitor and query the intelligence sources. If new intelligence has been received, the process proceeds to block 514, where processing logic applies the AI model to the identified new intelligence (e.g., intelligence reports, databases, etc.) to determine if one or more items of the new intelligence matches the monitored cybersecurity elements.

At block 516, processing logic determines if there is a match between the monitored elements and the new cybersecurity intelligence. If no match is identified, the process returns to block 510 to continue to monitor and query the sources of cybersecurity intelligence. If a match is identified, the process proceeds to block 518, where processing logic generates and provides a notification to the requesting user of the match along with an identification of the matched intelligence and a summary of the matched intelligence.

FIG. 6 illustrates a diagrammatic representation of a machine in the example form of a computer system 600 within which a set of instructions, for causing the machine to perform any one or more of the methodologies discussed herein.

In alternative embodiments, the machine may be connected (e.g., networked) to other machines in a local area network (LAN), an intranet, an extranet, or the Internet. The machine may operate in the capacity of a server or a client machine in a client-server network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a server, a network router, a switch or bridge, a hub, an access point, a network access control device, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein. In some embodiments, computer system 600 may be representative of a server.

The exemplary computer system 600 includes a processing device 602, a main memory 604 (e.g., read-only memory (ROM), flash memory, dynamic random access memory (DRAM), a static memory 606 (e.g., flash memory, static random access memory (SRAM), etc.), and a data storage device 618 which communicate with each other via a bus 630. Any of the signals provided over various buses described herein may be time multiplexed with other signals and provided over one or more common buses. Additionally, the interconnection between circuit components or blocks may be shown as buses or as single signal lines. Each of the buses may alternatively be one or more single signal lines and each of the single signal lines may alternatively be buses.

Computer system 600 may further include a network interface device 608 which may communicate with a network 620. Computer system 600 also may include a video display unit 610 *(e.g.,* a liquid crystal display (LCD) or a cathode ray tube (CRT)), an alphanumeric input device 612 *(e.g.,* a keyboard), a cursor control device 614 *(e.g.,* a mouse) and an acoustic signal generation device 616 *(e.g.,* a speaker). In some embodiments, video display unit 610, alphanumeric input device 612, and cursor control device 614 may be combined into a single component or device *(e.g.,* an LCD touch screen).

Processing device 602 represents one or more general-purpose processing devices such as a microprocessor, central processing unit, or the like. More particularly, the processing device may be complex instruction set computing (CISC) microprocessor, reduced instruction set computer (RISC) microprocessor, very long instruction word (VLIW) microprocessor, or processor implementing other instruction sets, or processors implementing a combination of instruction sets. Processing device 602 may also be one or more special-purpose processing devices such as an application specific integrated circuit (ASIC), a field programmable gate array (FPGA), a digital signal processor (DSP), network processor, or the like. The processing device 602 is configured to execute notification system instructions 625, for performing the operations and steps discussed herein.

The data storage device 618 may include a machine-readable storage medium 628, on which is stored one or more sets of notification system instructions 625 (e.g., software) embodying any one or more of the methodologies of functions described herein. The notification system instructions 625 may also reside, completely or at least partially, within the main memory 604 or within the processing device 602 during execution thereof by the computer system 600; the main memory 604 and the processing device 602 also constituting machine-readable storage media. The notification system instructions 625 may further be transmitted or received over a network 620 via the network interface device 608.

The machine-readable storage medium 628 may also be used to store instructions to perform a method for intelligently scheduling containers, as described herein. While the machine-readable storage medium 628 is shown in an exemplary embodiment to be a single medium, the term "machine-readable storage medium" should be taken to include a single medium or multiple media (e.g., a centralized or distributed database, or associated caches and servers) that store the one or more sets of instructions. A machine-readable medium includes any mechanism for storing information in a form (e.g., software, processing application) readable by a machine (e.g., a computer). The machine-readable medium may include, but is not limited to, magnetic storage medium (e.g., floppy diskette); optical storage medium (e.g., CD-ROM); magneto-optical storage medium; read-only memory (ROM); random-access memory (RAM); erasable programmable memory (e.g., EPROM and EEPROM); flash memory; or another type of medium suitable for storing electronic instructions.

Unless specifically stated otherwise, terms such as "replacing," "providing," "receiving," or the like, refer to actions and processes performed or implemented by computing devices that manipulates and transforms data represented as physical (electronic) quantities within the computing device's registers and memories into other data similarly represented as physical quantities within the computing device memories or registers or other such information storage, transmission or display devices. Also, the terms "first," "second," "third," "fourth," etc., as used herein are meant as labels to distinguish among different elements and may not necessarily have an ordinal meaning according to their numerical designation.

Examples described herein also relate to an apparatus for performing the operations described herein. This apparatus may be specially constructed for the required purposes, or it may comprise a general purpose computing device selectively programmed by a computer program stored in the computing device. Such a computer program may be stored in a computer-readable non-transitory storage medium.

The methods and illustrative examples described herein are not inherently related to any particular computer or other apparatus. Various general purpose systems may be used in accordance with the teachings described herein, or it may prove convenient to construct more specialized apparatus to perform the required method steps. The required structure for a variety of these systems will appear as set forth in the description above.

The above description is intended to be illustrative, and not restrictive. Although the present disclosure has been described with references to specific illustrative examples, it will be recognized that the present disclosure is not limited to the examples described. The scope of the disclosure should be determined with reference to the following claims, along with the full scope of equivalents to which the claims are entitled.

As used herein, the singular forms "a," "an" and "the" are intended to include the plural forms as well, unless the context clearly indicates otherwise. It will be further understood that the terms "comprises", "comprising", "includes", and/or "including", when used herein, specify the presence of stated features, integers, steps, operations, elements, and/or components, but do not preclude the presence or addition of one or more other features, integers, steps, operations, elements, components, and/or groups thereof. Therefore, the terminology used herein is for the purpose of describing particular embodiments only and is not intended to be limiting.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Although the method operations were described in a specific order, it should be understood that other operations may be performed in between described operations, described operations may be adjusted so that they occur at slightly different times or the described operations may be distributed in a system which allows the occurrence of the processing operations at various intervals associated with the processing.

Various units, circuits, or other components may be described or claimed as "configured to" or "configurable to" perform a task or tasks. In such contexts, the phrase "configured to" or "configurable to" is used to connote structure by indicating that the units/circuits/components include structure (e.g., circuitry) that performs the task or tasks during operation. As such, the unit/circuit/component can be said to be configured to perform the task, or configurable to perform the task, even when the specified unit/circuit/component is not currently operational (e.g., is not on). The units/circuits/components used with the "configured to" or "configurable to" language include hardware--for example, circuits, memory storing program instructions executable to implement the operation, etc. Reciting that a unit/circuit/component is "configured to" perform one or more tasks, or is "configurable to" perform one or more tasks, is expressly intended not to invoke 35 U.S.C. § 112(f) for that unit/circuit/component. Additionally, "configured to" or "configurable to" can include generic structure (e.g., generic circuitry) that is manipulated by software and/or firmware (e.g., an FPGA or a general-purpose processor executing software) to operate in manner that is capable of performing the task(s) at issue. "Configured to" may also include adapting a manufacturing process (e.g., a semiconductor fabrication facility) to fabricate devices (e.g., integrated circuits) that are adapted to implement or perform one or more tasks. "Configurable to" is expressly intended not to apply to blank media, an unprogrammed processor or unprogrammed generic computer, or an unprogrammed programmable logic device, programmable gate array, or other unprogrammed device, unless accompanied by programmed media that confers the ability to the unprogrammed device to be configured to perform the disclosed function(s).

The foregoing description, for the purpose of explanation, has been described with reference to specific embodiments. However, the illustrative discussions above are not intended to be exhaustive or to limit the present disclosure to the precise forms disclosed. Many modifications and variations are possible in view of the above teachings. The embodiments were chosen and described in order to best explain the principles of the embodiments and its practical applications, to thereby enable others skilled in the art to best utilize the embodiments and various modifications as may be suited to the particular use contemplated. Accordingly, the present embodiments are to be considered as illustrative and not restrictive, and the present disclosure is not to be limited to the details given herein, but may be modified within the scope and equivalents of the appended claims.

## Claims

1. A method comprising:
receiving a natural language query from a client device;
processing, by a processing device executing an artificial intelligence, AI, model, the natural language query to identify elements of cybersecurity intelligence to monitor;
monitoring cybersecurity intelligence for a match to the identified elements from the natural language query; and
providing a notification to the client device in response to the matching of the identified elements to one or more items of cybersecurity intelligence.

2. The method of claim 1, further comprising:
generating a workflow from the natural language query, the workflow comprising one or more steps for identifying the elements of cybersecurity intelligence and monitoring the identified elements.

3. The method of claim 2, wherein monitoring the cybersecurity intelligence comprises applying, by the AI model, the generative workflow to the cybersecurity intelligence.

4. The method of any preceding claim, wherein the cybersecurity intelligence comprises one or more of cybersecurity intelligence reports or cybersecurity intelligence databases comprising unstructured data.

5. The method of any preceding claim, further comprising:
generating a notification request entry corresponding to the client device, wherein the notification request entry comprises the identified elements for monitoring.

6. The method of any preceding claim, wherein the notification to the client device comprises an indication of cybersecurity intelligence matching the identified elements and a summary of the matched cybersecurity intelligence.

7. The method of any preceding claim, wherein monitoring cybersecurity intelligence for a match to the identified elements comprises:
determining whether new cybersecurity intelligence has been received; and
in response to determining that new cybersecurity intelligence has been received, processing the new cybersecurity intelligence to determine whether the new cybersecurity intelligence comprises one or more of the identified elements.

8. A system comprising:
a processing device; and
a memory to store instructions that, when executed by the processing device cause the processing device to:
receive a natural language query from a client device;
process, by an artificial intelligence, AI, model, the natural language query to identify elements of cybersecurity intelligence to monitor;
monitor cybersecurity intelligence for a match to the identified elements from the natural language query; and
provide a notification to the client device in response to the matching of the identified elements to one or more items of cybersecurity intelligence.

9. The system of claim 8, wherein the processing device is further to:
generate a workflow from the natural language query, the workflow comprising one or more steps for identifying the elements of cybersecurity intelligence and monitoring the identified elements.

10. The system of claim 9, wherein to monitor the cybersecurity intelligence the processing device is to:
apply, by the AI model, the generative workflow to the cybersecurity intelligence.

11. The system of any one of claims 8 to 10, wherein the cybersecurity intelligence comprises one or more of cybersecurity intelligence reports or cybersecurity intelligence databases comprising unstructured data.

12. The system of any one of claims 8 to 11, wherein the processing device is further to:
generate a notification request entry corresponding to the client device, wherein the notification request entry comprises the identified elements for monitoring.

13. The system of any one of claims 8 to 12, wherein the notification to the client device comprises an indication of cybersecurity intelligence matching the identified elements and a summary of the matched cybersecurity intelligence.

14. The system of any one of claims 8 to 13, wherein to monitor cybersecurity intelligence for a match to the identified elements the processing device is to:
determine whether new cybersecurity intelligence has been received; and
in response to determining that new cybersecurity intelligence has been received, process the new cyber intelligence to determine whether the new cybersecurity intelligence comprises one or more of the identified elements.

15. A computer program which, when executed by a processing device, causes the processing device to carry out the method of anu one of claims 1 to 7
